(19) Europäisches Patentamt
European Patent Office
Office européen des brevets

(11) **EP 2 150 006 A2**

(12) **EUROPEAN PATENT APPLICATION**

(43) Date of publication:
**03.02.2010 Bulletin 2010/05**

(51) Int Cl.:
***H04L 12/28*** *(2006.01)*

(21) Application number: **09173112.5**

(22) Date of filing: **31.07.2007**

(84) Designated Contracting States:
**DE FR GB IT**
Designated Extension States:
**AL BA HR MK RS**

(30) Priority: **08.09.2006 GB 0617756**

(62) Document number(s) of the earlier application(s) in accordance with Art. 76 EPC:
**07113484.5 / 1 898 562**

(71) Applicant: **FUJITSU LIMITED**
**Kawasaki-shi,**
**Kanagawa 211-8588 (JP)**

(72) Inventors:
• **Hart, Michael John Beems**
  **London, W12 9LL (GB)**
• **Zhou, Yuefeng**
  **West Sussex, RH16 1UZ (GB)**

(74) Representative: **Stebbing, Timothy Charles**
**Haseltine Lake LLP**
**Lincoln House, 5th Floor**
**300 High Holborn**
**London WC1V 7JH (GB)**

Remarks:
This application was filed on 15-10-2009 as a divisional application to the application mentioned under INID code 62.

(54) **Communication systems**

(57)  A wireless communication system, in which transmissions between a mobile station (MS/SS) and a base station (BS) are relayed via at least one relay station (RS). The relay station determines whether the mobile station has issued a ranging code and if so, notifies the base station of this. The base station detects any ranging code received directly or notified from the relay station and uses all such detections to decide how to respond to the mobile station. In this way, with minimal modifications to an existing BS, legacy MS/SS can be supported within a multi-hop wireless communication system. The system may in other respects conform to the IEEE802.16 standard for single-hop wireless communication.

Fig.4

EP 2 150 006 A2

**Description**

Currently there exists significant interest in the use of multihop techniques in packet based radio and other communication systems, where it is purported that such techniques will enable both extension in coverage range and increase in system capacity (throughput).

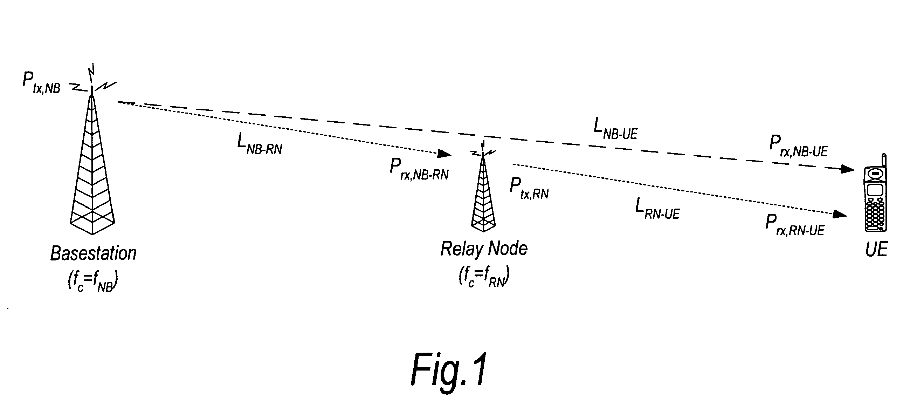

In a multi-hop communication system, communication signals are sent in a communication direction along a communication path from a source apparatus to a destination apparatus via one or more intermediate apparatuses. Figure 1 illustrates a single-cell two-hop wireless communication system comprising a base station BS (known in the context of 3G communication systems as "node-B" NB), a relay node RN (also known as a relay station RS), and an item of user equipment UE (also known as a mobile station MS or subscriber station SS; below, the term MS/SS is used to denote either of these types of UE). In the case where signals are being transmitted on the downlink (DL) from a base station to a destination user equipment (UE) via the relay node (RN), the base station comprises the source station (S) and the user equipment comprises the destination station (D). In the case where communication signals are being transmitted on the uplink (UL) from the user equipment (UE), via the relay node, to the base station, the user equipment comprises the source station and the base station comprises the destination station. The latter form of communication includes signals transmitted by the user equipment to identify itself to the base station (and hence to the network) as part of a network entry procedure. This is of particular relevance to the present invention as will be explained below.

The relay node is an example of an intermediate apparatus and comprises: a receiver, operable to receive data from the source apparatus; and a transmitter, operable to transmit this data, or a derivative thereof, to the destination apparatus.

Simple analogue repeaters or digital repeaters have been used as relays to improve or provide coverage in dead spots. They can either operate in a different transmission frequency band from the source station to prevent interference between the source transmission and the repeater transmission, or they can operate at a time when there is no transmission from the source station.

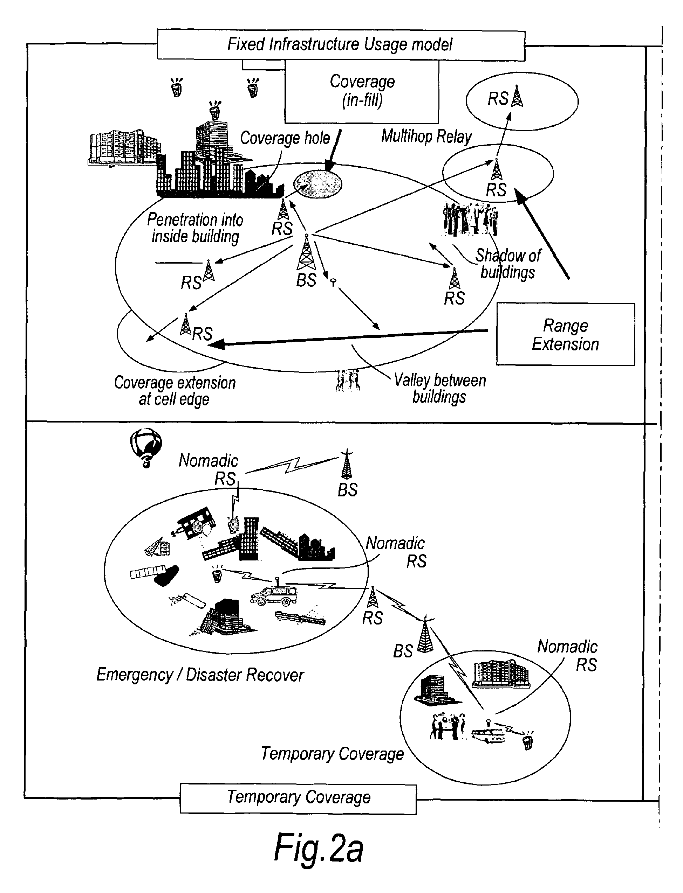

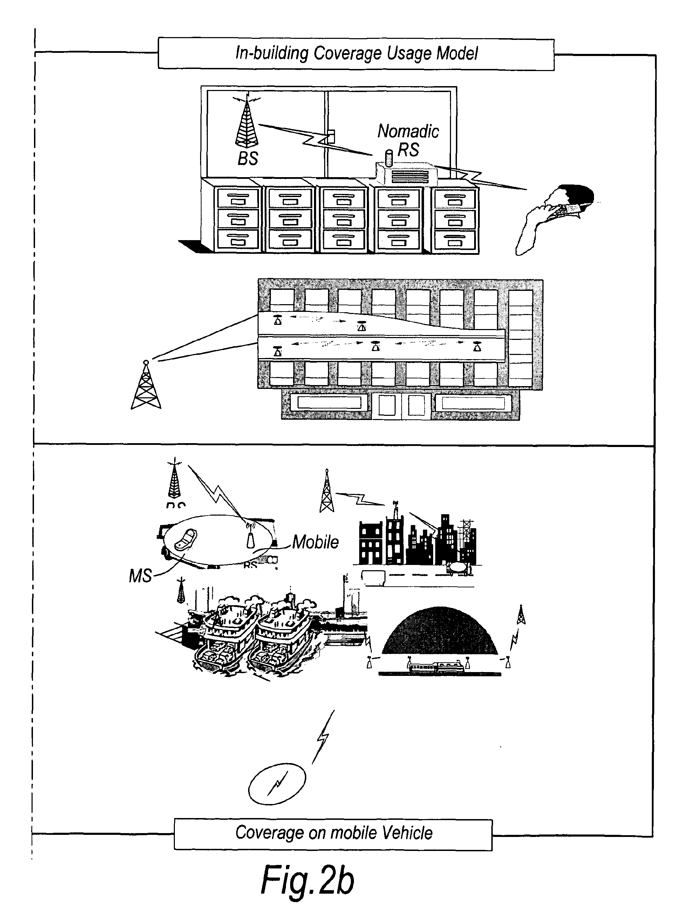

Figure 2 illustrates a number of applications for relay stations. For fixed infrastructure, the coverage provided by a relay station may be "in-fill" to allow access to the communication network for mobile stations which may otherwise be in the shadow of other objects or otherwise unable to receive a signal of sufficient strength from the base station despite being within the normal range of the base station. "Range extension" is also shown, in which a relay station allows access when a mobile station is outside the normal data transmission range of a base station. One example of in-fill shown at the top right of Figure 2 is positioning of a nomadic relay station to allow penetration of coverage within a building that could be above, at, or below ground level.

Other applications are nomadic relay stations which are brought into effect for temporary cover, providing access during events or emergencies/disasters. A final application shown in the bottom right of Figure 2 provides access to a network using a relay positioned on a vehicle.

Relays may also be used in conjunction with advanced transmission techniques to enhance gain of the communications system as explained below.

It is known that the occurrence of propagation loss, or "pathloss", due to the scattering or absorption of a radio communication as it travels through space, causes the strength of a signal to diminish. Factors which influence the pathloss between a transmitter and a receiver include: transmitter antenna height, receiver antenna height, carrier frequency, clutter type (urban, sub-urban, rural), details of morphology such as height, density, separation, terrain type (hilly, flat). The pathloss L (dB) between a transmitter and a receiver can be modelled by:

$$L = b + 10n \log d \qquad\qquad (A)$$

Where d (metres) is the transmitter-receiver separation, b(db) and n are the pathloss parameters and the absolute pathloss is given by $l = 10^{(L/10)}$.

The sum of the absolute path losses experienced over the indirect link SI + ID may be less than the pathloss experienced over the direct link SD. In other words it is possible for:

$$L(SI) + L(ID) < L(SD) \qquad\qquad (B)$$

Splitting a single transmission link into two (or more) shorter transmission segments therefore exploits the non-linear relationship between pathloss verses distance. From a simple theoretical analysis of the pathloss using equation (A), it can be appreciated that a reduction in the overall pathloss (and therefore an improvement, or gain, in signal strength and thus data throughput) can be achieved if a signal is sent from a source apparatus to a destination apparatus via an intermediate apparatus (e.g. relay node), rather than being sent directly from the source apparatus to the destination apparatus. If implemented appropriately, multi-hop communication systems can allow for a reduction in the transmit power of transmitters which facilitate wireless transmissions, leading to a reduction in interference levels as well as decreasing exposure to electromagnetic emissions. Alternatively, the reduction in overall pathloss can be exploited to improve the received signal quality at the receiver without an increase in the overall radiated transmission power required to convey the signal.

Multi-hop systems are suitable for use with multi-carrier transmission. In a multi-carrier transmission system, such as FDM (frequency division multiplex), OFDM (orthogonal frequency division multiplex) or DMT (discrete multi-tone), a single data stream is modulated onto N parallel sub-carriers, each sub-carrier signal having its own frequency range. This allows the total bandwidth (i.e. the amount of data to be sent in a given time interval) to be divided over a plurality of sub-carriers thereby increasing the duration of each data symbol. Since each sub-carrier has a lower information rate, multi-carrier systems benefit from enhanced immunity to channel induced distortion compared with single carrier systems. This is made possible by ensuring that the transmission rate and hence bandwidth of each subcarrier is less than the coherence bandwidth of the channel. As a result, the channel distortion experienced on a signal subcarrier is frequency independent and can hence be corrected by a simple phase and amplitude correction factor. Thus the channel distortion correction entity within a multicarrier receiver can be of significantly lower complexity than its counterpart within a single carrier receiver when the system bandwidth is in excess of the coherence bandwidth of the channel.

Orthogonal frequency division multiplexing (OFDM) is a modulation technique that is based on FDM. An OFDM system uses a plurality of sub-carrier frequencies which are orthogonal in a mathematical sense so that the sub-carriers' spectra may overlap without interference due to the fact they are mutually independent. The orthogonality of OFDM systems removes the need for guard band frequencies and thereby increases the spectral efficiency of the system. OFDM has been proposed and adopted for many wireless systems. It is currently used in Asymmetric Digital Subscriber Line (ADSL) connections, in some wireless LAN applications (such as WiFi devices based on the IEEE802.11a/g standard), and (of particular relevance to the present invention) in wireless MAN applications such as WiMAX (based on the IEEE 802.16 standard). OFDM is often used in conjunction with channel coding, an error correction technique, to create coded orthogonal FDM or COFDM. COFDM is now widely used in digital telecommunications systems to improve the performance of an OFDM based system in a multipath environment where variations in the channel distortion can be seen across both subcarriers in the frequency domain and symbols in the time domain. The system has found use in video and audio broadcasting, such as DVB and DAB, as well as certain types of computer networking technology.

In an OFDM system, a block of N modulated parallel data source signals is mapped to N orthogonal parallel sub-carriers by using an Inverse Discrete or Fast Fourier Transform algorithm (IDFT/IFFT) to form a signal known as an "OFDM symbol" in the time domain at the transmitter. Thus, an "OFDM symbol" is the composite signal of all N sub-carrier signals. An OFDM symbol can be represented mathematically as:

$$x(t) = \frac{1}{\sqrt{N}} \sum_{n=0}^{N-1} c_n . e^{j2\pi n \Delta ft}, 0 \le t \le T_s \qquad (1)$$

where $\Delta f$ is the sub-carrier separation in Hz, Ts = $1/\Delta f$ is symbol time interval in seconds, and $c_n$ are the modulated source signals. The sub-carrier vector in (1) onto which each of the source signals is modulated $c \in C_n$, c = $(c_0, c_1..c_{N-1})$ is a vector of N constellation symbols from a finite constellation. At the receiver, the received time-domain signal is transformed back to frequency domain by applying Discrete Fourier Transform (DFT) or Fast Fourier Transform (FFT) algorithm.

OFDMA (Orthogonal Frequency Division Multiple Access) is a multiple access variant of OFDM. It works by assigning a subset of sub-carriers, to an individual user. This allows simultaneous transmission from several users leading to better spectral efficiency. However, there is still the issue of allowing bi-directional communication, that is, in the uplink and download directions, without interference.

In order to enable bi-directional communication between two nodes, two well known different approaches exist for duplexing the two (forward or download and reverse or uplink) communication links to overcome the physical limitation that a device cannot simultaneously transmit and receive on the same resource medium. The first, frequency division duplexing (FDD), involves operating the two links simultaneously but on different frequency bands by subdividing the transmission medium into two distinct bands, one for forward link and the other for reverse link communications. The second, time division duplexing (TDD), involves operating the two links on the same frequency band, but subdividing the access to the medium in time so that only the forward or the reverse link will be utilizing the medium at any one point in time. Both approaches (TDD & FDD) have their relative merits and are both well used techniques for single hop wired and wireless communication systems. For example the IEEE802.16 standard incorporates both an FDD and TDD mode. IEEE Std 802.16-2004 "Air Interface for Fixed Broadband Wireless Access Systems" is hereby incorporated by reference in its entirety.

In a single-hop communication system in which communication takes place directly between an MS/SS and a BS, a network entry procedure is followed by the MS/SS in conjunction with the BS. However, the known network entry procedure is not sufficient for a multi-hop system in which communication between the BS and MS/SS takes place via one or more relay stations RS. There is consequently a need for an improved network entry procedure applicable in such a case.

According to a first aspect of the present invention, there is provided a multi-hop wireless communication system comprising:

a source apparatus configured to transmit a code;
an intermediate apparatus configured to receive said code and to transmit notification to a destination apparatus in response to reception of said code; and
a destination apparatus configured to check not only whether said code is directly received from source apparatus but also whether said code is received by said intermediate apparatus for a communication path selection.

Other aspects of the present invention are defined in the independent claims, to which reference should now be made. Advantageous embodiments are set out in the sub claims.

Embodiments of the invention provide a communication method, communication system, intermediate apparatus (e.g., a relay station RS) and a base station (BS) employing a novel protocol adopted as a network entry procedure followed by the BS and RS, to enable entry of a legacy MS or SS into a relaying enabled communication network. The protocol allows centralised control of the overall process. The protocol may be implemented as an adaptation of the current network entry procedure followed in the IEEE802.16 standard and is primarily designed for the case of the transparent style of relaying (i.e. a relay that does not broadcast control signals such as the preamble or MAP). The present invention also embraces computer software for executing the novel protocol on a BS or RS.

Preferred features of the present invention will now be described, by way of example, with reference to the accompanying drawings, in which:-

Figure 1 shows a single-cell two-hop wireless communication system;

Figure 2 shows applications of relay stations;

Figure 3 shows standard MS network entry procedure; and

Figure 4 shows a BS ranging code detection procedure in a relay enabled network, embodying the invention.

In legacy single hop systems (e.g. 802.16-2004 and 802.16e-2005), standard network entry procedures already exist to support entry of an MS or SS into a communication network. However, when the network is modified to support relaying functionality, of which a legacy MS or SS has no knowledge, a modified network entry procedure is required from the network point of view to facilitate fast and efficient support of MS/SS network entry.

This invention relates to a protocol that is intended to be adopted as the modified network entry procedure from the network point of view, i.e. adopted in the RS and BS. In particular it is designed with application to the IEEE802.16 standard in mind and requires no changes to the procedure from the MS or SS point of view. It is also designed for the case of transparent relaying where it is assumed that control of network entry will be predominately performed in a centralised manner (i.e. in the BS, with some limited assistance from the RS).

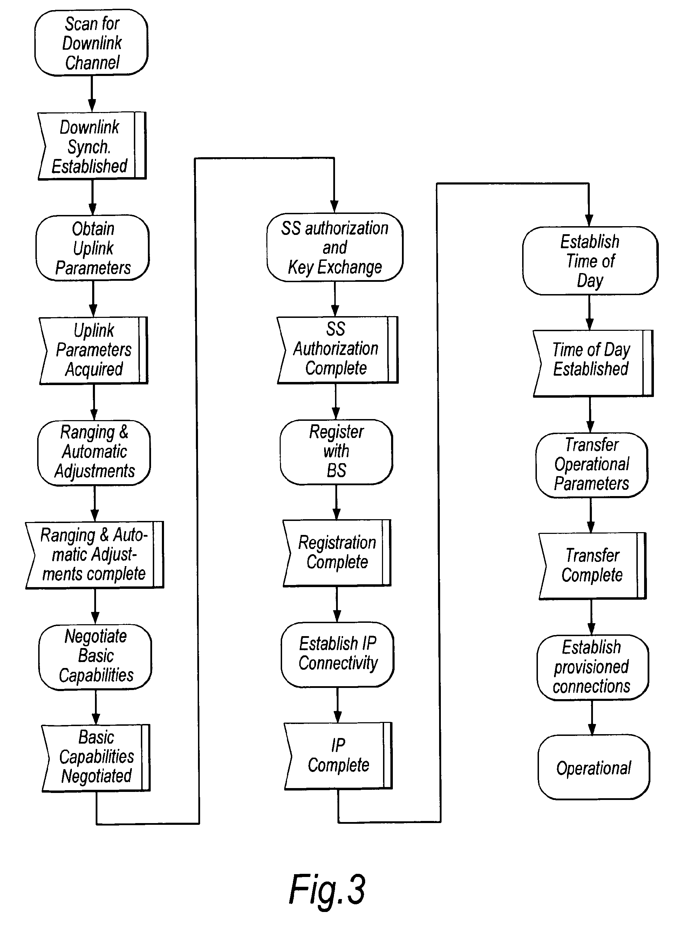

Figure 3 illustrates the network entry procedure described in the IEEE802.16 standard which supports network entry of an MS or SS into a single-hop communication system.

Here, it is assumed that any RS with which the MS is communicating during the network entry procedure is already known to the network (incidentally, in this specification, the terms "network" and "system" are used interchangeably). For example, the RS may have already completed entry into the network following a separate procedure, such as the one described in the applicant's UK application no. 0616475.0, the disclosure of which is hereby incorporated by reference. It is also assumed that, as the network is required to support legacy users, the MS or SS still follows the same network entry procedure from its point of view, as illustrated in Figure 3. However, the procedure followed by the RS is defined here and the one followed by the BS is modified from that followed for the case of a single hop network. For ease of explanation, a two-hop configuration as in Fig. 1 will be considered although the present invention is not limited to this.

Referring to Figure 3, the following operations take place during the identified stages:

Scan for Downlink Channel

During this stage the MS/SS scans for BS preamble transmissions (note RS will not transmit preamble in this case). Once all potential preambles are detected, the MS will select which channel it wishes to use from the available set of channels, in line with the standard procedure. It will then synchronise its receiver with the transmitter.
Note that no new operations are required on the network side.

Obtain Uplink Parameters

During this stage the MS/SS obtains uplink parameters which includes location of the uplink control information transmission region that will be used by the MS/SS in the next stage. Note that according to the frame structure for this mode of operation, the uplink parameters advertised by the BS must be common for the MS to RS uplink.
Note that no new operations are required on the network side.

Ranging & Automatic Adjustments

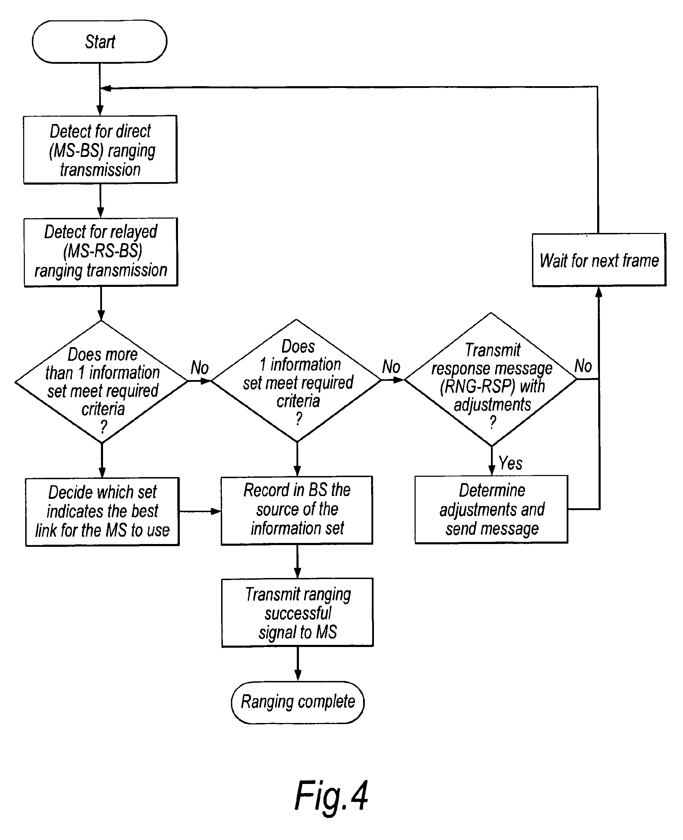

The MS/SS will transmit a ranging code or ranging message, as defined in the IEEE802.16 standard, as a form of identification information to identify itself to the network. (Incidentally, the term "ranging message" is more correct when OFDM is being used, and "ranging code" more appropriate to OFDMA, but in the following description "ranging code" is used for both). It is possible that a number of receivers in the multi-hop network receive this transmission.
The BS attempts to detect the transmission of a ranging code during this stage. However, if the transmit power used by the MS/SS was too low, detection may not occur. Further, if the BS detects the code but the received signal power is too low, it may ignore or ask the MS/SS to continue ranging such that it retransmits using a higher transmission power or applies some other adjustment to its transmission to make detection more reliable. In the standard procedure, once the BS successfully detects the code and is satisfied with the transmission parameter setting (synchronisation, received signal power, etc), it will inform the MS/SS of completion of the ranging process. The MS and the BS then continue the remainder of the network entry procedure in the known manner.
Referring now to Figure 4, in a relay enabled system, some modification is required to the operations on the network side, as described in the preceding paragraph. As the BS knows that an RS exists, not only will it check for direct ranging code reception from an MS, it will also check for ranging code detection at the RS, before deciding on whether or not to transmit a ranging code related response to the MS. This is a first feature of the invention.
Any of the following three different mechanisms may be employed to inform the BS of the reception of a ranging code at the RS. These mechanisms form additional features of the invention:

(a) The RS simply receives and retransmits the ranging code on to the BS. In doing so, it is assumed that the RS ensures that the transmission power at the RS is reasonable. For example, the received carrier-to-interference plus noise ratio - CINR - on the ranging code at the BS should be similar to the received CINR on the ranging code at the RS. Such a situation will automatically occur if the invention in the applicant's EP application no. 05253783.4, the disclosure of which is hereby incorporated by reference, is applied. If this is not ensured then the detection probability will not correctly represent the conditions at the RS receiver. If this situation (i.e. lack of CINR balance) is known at the BS, which could be the case as described in the just-mentioned [UK] application, it is possible that the BS can then correct for this knowledge following detection by adjusting the observed CINR appropriately. Received signal strength - RSSI - may be used as an alternative to CINR.

(b) The RS detects the code and rather than forwarding the code, instead it forwards the detection information on to the BS. The detection information could include, but is not limited to, the code index used by the transmitter and the received CINR at the RS. It could also include information about the timing or frequency accuracy of the received signal from the MS.

(c) Alternatively, the BS informs the RS of a ranging acceptance threshold (i.e. the level of CINR that must be observed) and then the RS simply informs the BS when it is has detected a user.

Once the BS has the appropriate information from the RS via one of the mechanisms detailed above, the BS then combines the relayed information regarding code detection with that of any information relating to direct code detection at the BS during the normal uplink ranging transmission interval. Note that it is possible that it receives relayed detection information from a number of relays so it may actually have more than two sets of information to arbitrate. The relays may be from multiple RS receiving the same ranging code in parallel from the MS/SS.

Alternatively, in a multi-hop configuration, multiple RS may be interposed in the communication path between the MS/SS and BS. In such a case, the above procedure is modified to include one RS receiving, and/or relaying, a ranging code or detection information from/to another RS.

The procedure in the BS for managing the process is illustrated in Figure 4.

Once ranging is complete the remainder of the existing network entry procedure is followed by the BS and MS with the flow of data taking place through the selected route. The transmission route may vary between the uplink and the downlink; in particular, there may be no need for information on the downlink to be relayed via the RS, so that the response from the BS can be transmitted directly to the MS. Alternatively a plurality of RS may be include in the uplink with fewer or no RS involved in the downlink.

In summary, the present invention defines an initial ranging procedure that enables a network to support entry of a legacy MS or SS into a relaying enabled communication network. Only a minimal number of modifications are required in the BS to the legacy network entry procedure. Embodiments of the present invention provide three different approaches for relaying MS detection information at the RS to the BS, such that it is possible to select the technique that is most appropriate for the system into which the technique is to be employed (i.e. signalling overhead, RS complexity, BS complexity, protocol reliability).

In the above description, it is assumed that the network could consist of some legacy BS (i.e., base stations operating in compliance with existing protocols) and some relaying enabled BS (i.e., base stations modified so as to be able to operate in accordance with the present invention). It is also assumed that a relaying enabled BS may be operating in a legacy mode until it receives a request from an RS for it to enter the network. The reason the BS may operate in such a mode would be to preserve transmission resources by not having to broadcast relay specific information when there are no relays benefiting from the transmission.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of a transmitter embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

A program embodying the invention could also be used to add the functionality of the RS as described above to a MS/SS having suitable hardware.

Thus, an embodiment of the present invention can provide a transmission method for use in a wireless communication system having a source apparatus and a destination apparatus, at least transmission from the source apparatus to the destination apparatus being conducted via an intermediate apparatus, the source apparatus being arranged to transmit an identification message to identify itself to the system, the method comprising: in the intermediate apparatus, determining whether an identification message from the source apparatus is received and if so, informing the destination apparatus of the reception of the identification message; and in the destination apparatus, detecting any identification message received directly at the destination apparatus from the source apparatus, detecting whether the intermediate apparatus has informed the destination apparatus of the reception of the identification message, and using said detections to decide whether to send a response to the source apparatus.

In a first possible mechanism used in this method, the intermediate apparatus informs the destination apparatus of the reception of the identification message by retransmitting the identification message to the destination apparatus. Alternatively, in a second mechanism, the intermediate apparatus informs the destination apparatus of the reception of the identification message by transmitting a notification message to the destination apparatus.

A third mechanism is one in which the destination apparatus previously informs the intermediate apparatus of an acceptance criterion for the identification message, and the intermediate apparatus notifies the destination apparatus upon determining that a identification message meeting said criterion has been received.

In the first mechanism, preferably, the destination apparatus compares any identification message received directly, and the identification message retransmitted from the intermediate apparatus, with an acceptance criterion.

In the second mechanism, preferably, the notification message includes information on the quality of the received identification message, and the destination apparatus compares any identification message received directly, and said information in the notification from the intermediate apparatus, with an acceptance criterion.

Here, if the result of said comparison is that no identification message meeting the acceptance criterion has been received, the destination apparatus preferably transmits a request for retransmission of the identification message.

The acceptance criterion may relate to a carrier-to-interference plus noise ratio (CINR) of the identification message, or to a received signal strength (RSSI) of the identification message.

In any case, there may be a plurality of the intermediate apparatuses each of which is capable of receiving the identification message from the source apparatus, the method further comprising, in the destination apparatus, arbitrating among multiple detections to decide how to send a response to the source apparatus.

A plurality of the intermediate apparatuses may be arranged in a multi-hop configuration between the source apparatus and the destination apparatus, said informing step including informing another intermediate apparatus of reception of the identification message.

In the above method, preferably, the identification message is a ranging code and the response of the destination apparatus is a ranging response.

The source apparatus may be a mobile terminal; and the destination apparatus may be a base station. The or each intermediate apparatus may be a relay station.

The system may be an OFDM or OFDMA system.

An embodiment of the present invention may also provide a wireless communication system having a source apparatus, a destination apparatus and at least one intermediate apparatus, at least transmission from the source apparatus to the destination apparatus being conducted via the intermediate apparatus, the source apparatus being arranged to transmit an identification message to identify itself to the system, wherein: the intermediate apparatus includes means for determining whether an identification message from the source apparatus is received and if so, informing the destination apparatus of the reception of the identification message; and the destination apparatus includes detecting means for detecting any identification message received directly at the destination apparatus from the source apparatus, and for detecting whether the intermediate apparatus has informed the destination apparatus of the reception of the identification message, and decision means responsive to an output of said detecting means to decide whether to send a response to the source apparatus.

In one form, the intermediate apparatus includes means for informing the destination apparatus of the reception of the identification message by retransmitting the identification message towards the destination apparatus.

In another form, the intermediate apparatus includes means for informing the destination apparatus of the reception of the identification message by transmitting a notification message towards the destination apparatus.

Alternatively, the destination apparatus includes means for informing the intermediate apparatus of an acceptance criterion for the identification message, and the intermediate apparatus is arranged to notify the destination apparatus upon determining that a identification message meeting said criterion has been received.

A further embodiment of the present invention may provide a wireless communication system comprising a subscriber station and a base station each arranged to transmit and receive information, and one or more relay stations interposed at least in an uplink from the subscriber station to the base station, the subscriber station transmitting a ranging message to identify itself to the system, wherein: each relay station includes means for determining whether a ranging message has been received from the subscriber station or from a downstream relay station and if so, informing the base station or an upstream relay station of the reception of the ranging message; and the base station includes detecting means for detecting any ranging message which it has received directly from the subscriber station, and for detecting whether any relay station has informed it of the reception of a ranging message originating from the subscriber station, and decision means for using said detections to decide whether or how to send a ranging response to the subscriber station.

There may further be provided an intermediate apparatus for facilitating transmission and reception of information between a source apparatus and a destination apparatus in a wireless communication system by forming a communication path extending from the source apparatus to the intermediate apparatus and a communication path from the intermediate apparatus to the destination apparatus, and the intermediate apparatus being operable to receive and process information from the source apparatus including an identification message identifying the source apparatus to the system, wherein: the intermediate apparatus includes means for determining whether a identification message from the source apparatus is received and if so, informing the destination apparatus of the reception of the identification message.

This intermediate apparatus may be arranged to inform the destination apparatus of the reception of the identification message by retransmitting the identification message to the destination apparatus; or it may be arranged to inform the destination apparatus of the reception of the identification message by transmitting a notification message to the destination apparatus. Or instead, the destination apparatus previously informs the intermediate apparatus of an acceptance criterion for the identification message, and the intermediate apparatus is arranged to notify the destination apparatus upon determining that a identification message meeting said criterion has been received.

A further embodiment of the present invention may provide a base station forming a communication system together with a subscriber station and at least one relay station each arranged to transmit and receive information, the subscriber station being further arranged to transmit a identification message to identify itself to the system, and the relay station being further arranged to inform the base station of receipt of such an identification message, wherein: the base station includes detecting means for detecting any identification message received directly from the subscriber station, and for detecting whether the relay station has informed the destination apparatus of the reception of the identification message, and decision means for using results of the detecting means to decide whether to send a response to the subscriber station.

**Claims**

1. A multi-hop wireless communication system comprising:

   a source apparatus configured to transmit a code;
   an intermediate apparatus configured to receive said code and to transmit notification to a destination apparatus in response to reception of said code; and
   a destination apparatus configured to check not only whether said code is directly received from source apparatus but also whether said code is received by said intermediate apparatus for a communication path selection.

2. The multi-hop wireless communication system according to claim 1, wherein a response to said code is transmitted to said source apparatus directly from said destination apparatus.

3. The multi-hop wireless communication system according to claim 2, wherein said response is not relayed by said intermediate apparatus.

4. The multi-hop wireless communication system according to claim 1, 2, or 3, wherein a path selected by said communication path selection is used for subsequent communication between said destination apparatus and said source apparatus.

5. The multi-hop wireless communication system according to any preceding claim, wherein said intermediate apparatus informs said destination apparatus of reception of said code when a criteria is satisfied with respect to said code.

6. The multi-hop wireless communication system according to claim 5, wherein said criteria is notified from said destination apparatus.

7. The multi-hop wireless communication system according to any preceding claim, wherein said notification includes information relating to code index, CINR relating to said code, a receiving timing of said code or a receiving frequency of said code.

8. The multi-hop wireless communication system according to any preceding claim, wherein a response to said code is transmitted to said source apparatus directly from said destination apparatus, the response including adjustment information when a criteria is not satisfied by said code.

9. A method for a multi-hop wireless communication system, said method comprising:

   transmitting a code from a source apparatus;
   receiving, by an intermediate apparatus, said code and transmitting notification to a destination apparatus in response to reception of said code from said intermediate apparatus; and
   checking, by said destination apparatus, not only whether said code is directly received from source apparatus but also whether said code is received by said intermediate apparatus for a communication path selection.

10. A source apparatus used in a multi-hop wireless communication system, said source apparatus comprising:

    a transmitter to transmit a code;
    a receiver to receive a response to said code directly from a destination apparatus that receives said code directly from said source apparatus and receives notification from an intermediate apparatus that transmits said notification in response to reception of said code from said source apparatus;

    wherein said source apparatus communicates with said destination apparatus using a path that is selected by said destination apparatus based on said code received directly and said notification.

11. An intermediate apparatus used in a multi-hop wireless communication system, said intermediate apparatus comprising:

a receiver to receive a code transmitted from a source apparatus;
a transmitter to transmit detection information of said code instead of said code itself to a destination apparatus,

wherein said detection information is used for a communication path selection by said destination apparatus.

12. A destination apparatus used in a multi-hop wireless communication system, said destination apparatus comprising:

a receiver to receive a code directly from a source apparatus and notification from an intermediate apparatus that transmits said notification in response to reception of said code from said source apparatus;

wherein said destination apparatus checks not only whether said code is directly received from source apparatus but also whether said code is received by said intermediate apparatus for a communication path selection.

*Fig.1*

**Fig.2a**

In-building Coverage Usage Model

Nomadic
RS

BS

Coverage on mobile Vehicle

RS

Mobile

MS

# Fig.2b

Fig.3

Start

Detect for direct
(MS-BS) ranging
transmission

Detect for relayed
(MS-RS-BS)
ranging transmission

Does more
than 1 information
set meet required
criteria
?

No →

Does
1 information
set meet required
criteria
?

No →

Transmit
response message
(RNG-RSP) with
adjustments
?

No →

Wait for next frame

Decide which set
indicates the best
link for the MS to use

Record in BS the
source of the
information set

Determine
adjustments and
send message

↓Yes

Transmit ranging
successful
signal to MS

Ranging complete

Fig.4

**REFERENCES CITED IN THE DESCRIPTION**

**Patent documents cited in the description**

- GB 0616475 A

- EP 05253783 A